# DEMANDE DE BREVET EUROPEEN

(11) **EP 4 818 826 A2**
(43) Date de publication de la demande: **07.10.2026**
(21) Numéro de dépôt: 26200330.4
(22) Date de dépôt: 12.04.2019
(51) Int. Cl.: G04D 3/00

(54) **PROCÉDÉ DE RÉALISATION D`UNE SURFACE DE RÉVOLUTION D`UN COMPOSANT HORLOGER**

(62) Numéro(s) de document de la (des) demande(s) initiale(s) en application de l'article 76 CBE: 19169113.8 / 3 722 887
(71) Demandeur: ROLEX SA, 1211 Genève 26 (CH)
(72) Inventeur: CUNTO, Giulio, 1214 Vernier (CH); NAGEL, Patrice, 74150 Vaulx (FR); OLIVEIRA, Alexandre, 74800 Amancy (FR)
(74) Mandataire: Moinas & Savoye SARL

(57) **Abrégé**

Procédé de réalisation d'une surface (20) de révolution d'un composant horloger (1), le procédé comprenant :
- une étape d'usinage avec un faisceau laser femto-seconde d'une première surface du composant horloger de sorte à obtenir une deuxième surface, en particulier de sorte à obtenir une deuxième surface dont la rugosité Ra est inférieure à 100 nm, voire inférieure à 70 nm, puis
- une étape de tribofinition appliquée à la deuxième surface de sorte à obtenir ladite surface de révolution,
le composant horloger (1) étant en métal dur, notamment en tungstène ou en tantale.

## Description

L'invention concerne un procédé de réalisation d'une surface de révolution d'un composant horloger, plus particulièrement un composant horloger en céramique. L'invention concerne encore un composant horloger obtenu par un tel procédé de réalisation. L'invention concerne aussi un mouvement horloger comprenant un tel composant horloger. L'invention concerne enfin une pièce d'horlogerie comprenant un tel composant horloger ou un tel mouvement horloger.

L'usinage de composants horlogers en céramique technique tels que décrits par exemple dans la demande de brevet EP3258325 est une opération délicate qui requiert une maîtrise des interactions entre l'outil et la matière, afin de ne pas induire de contraintes dans la céramique, ni de nouveaux défauts, notamment en surface, qui s'avèreraient être des amorces de fissure néfastes à la tenue aux chocs des composants.

La fabrication d'axes horlogers, de diamètre inférieur à 2 mm, s'avère particulièrement délicate, notamment en raison de la présence de pivots de très faible diamètre (< 200 microns, voire < 100 microns) aux extrémités de l'axe. Ces pivots doivent présenter une géométrie parfaitement circulaire et des dimensions respectées scrupuleusement. Ils sont prévus pour coopérer avec un palier, et tout défaut géométrique tel qu'un mal-rond ou un diamètre non respecté aura pour conséquence une perte des performances chronométriques du mouvement dans lequel cet axe sera intégré. Ceci est particulièrement valable pour l'axe de balancier. Il en va de même si la surface du pivot n'est pas parfaitement polie.

C'est la raison pour laquelle les axes selon l'état de l'art sont usinés par décolletage dans des aciers, puis les pivots sont polis avec des meules de forme pour obtenir à la fois la rugosité et la forme finales.

Cette technique est toutefois difficile à appliquer à des pièces en céramique : le décolletage au moyen d'outils de coupe ou de meules est très long, et les outils s'usent rapidement.

Une alternative à l'usinage de la céramique par meulage consiste à usiner la céramique par ablation laser femto-seconde. Les lasers utilisés ont des impulsions ultra-brèves (laser femto-seconde) de manière à ne pas affecter thermiquement la matière usinée.

Les équipements disponibles actuellement, tels qu'ils sont utilisés par les experts du domaine, par exemple pour la réalisation d'électrodes en métal dur ou d'autres éléments de petite taille généralement métalliques (comme des micro-pincettes) utilisent un laser émettant dans l'infrarouge IR (longueur d'onde de 1030 nm). Il n'a pas été possible d'obtenir des résultats satisfaisants au moyen de ce type d'équipement : les rugosités obtenues en sortie d'usinage sont importantes, elles requièrent une tribofinition spécifique très longue pour arriver aux rugosités requises et malgré la conformité géométrique des pièces, les performances en résistance en flexion ne sont pas conformes aux attentes.

La résistance à la flexion de pivots d'axes de géométrie identique, réalisées par meulage ou par usinage au laser-femto seconde selon l'état de l'art, a été mesurée par l'application d'une force au moyen d'un couteau à une distance donnée de l'extrémité d'un pivot, la pièce étant maintenue en appui au niveau d'une portée faisant l'interface entre ledit pivot et le corps principal de l'axe.

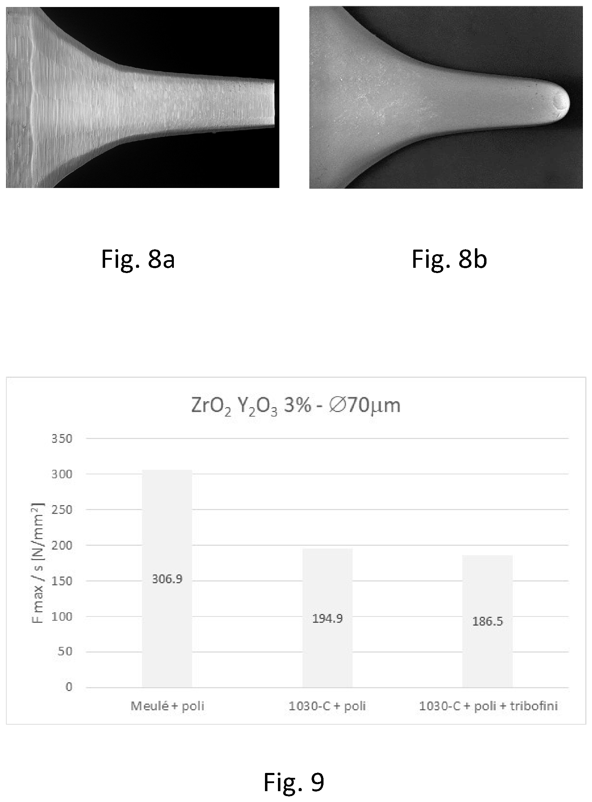

La résistance à la flexion de pivots de différents axes est représentée par la figure 9, qui indique les niveaux de contraintes à rupture des pivots de chacun de ces axes. Les contraintes mesurées sont corrélées à l'aire de la section de chacun des pivots à l'endroit de l'application de la force maximale initiant la rupture.

Comme illustré sur la figure 9, les pièces en zircone yttriée 3% (ZRO₂Y₂O₃ 3%) meulées sont ainsi plus résistantes que les pièces en zircone yttriée 3% (ZRO₂Y₂O₃ 3%) usinées par laser selon le procédé d'usinage par laser femto-seconde connu de l'état de l'art, qu'elles aient été ultérieurement polies ou polies puis tribofinies.

Il semble donc que des axes horlogers en céramique usinés par laser femto-seconde puissent présenter un comportement insatisfaisant à l'usage, bien qu'ils soient conformes dimensionnellement.

Le but de l'invention est de fournir un procédé de réalisation d'une surface de révolution d'un composant horloger en céramique améliorant les procédés connus de l'art antérieur. En particulier, l'invention propose un procédé permettant de réaliser un composant fiable, notamment un axe de balancier ou un axe d'un mobile d'échappement ou un axe d'un mobile des secondes ou tout autre axe prenant part à un mobile d'une chaîne de finissage d'un mouvement horloger, de manière répétable. La présente invention vise encore à accélérer et à fiabiliser l'usinage de la céramique de manière à obtenir des composants de type axe aux dimensions requises (diamètre < 2mm, tolérancé au micron) tout en garantissant une résistance adéquate aux chocs.

Selon l'invention, un procédé de réalisation est défini par la revendication 1.

Différents modes d'exécution du procédé sont définis par les revendications 2 à 10.

Selon l'invention, un composant horloger est défini par la revendication 11 ou 12.

Selon l'invention, un mouvement horloger est défini par la revendication 13.

Selon l'invention, une pièce d'horlogerie est définie par la revendication 14.

Les figures annexées représentent, à titre d'exemple, un mode de réalisation d'une pièce d'horlogerie selon l'invention.
La figure 1 est une vue schématique du mode de réalisation d'une pièce d'horlogerie comprenant un mode de réalisation d'un composant horloger.
La figure 2 est un graphique représentant des valeurs des rugosités Ra des surfaces obtenues par différents usinages laser de différentes céramiques.
La figure 3 est un graphique représentant les évolutions des valeurs des rugosités Ra des surfaces obtenues par différents usinages laser de zircone yttriée 3%.
Les figures 4a, 4b et 4c sont des photographies d'un pivot d'axe de balancier en zircone yttriée 3% respectivement après usinage laser IR (Ref. 1030), après 10h de tribofinition faisant suite audit usinage et après 20h de tribofinition faisant suite audit usinage.
La figure 5 est un graphique représentant des valeurs de contraintes à rupture de différents axes de balancier en zircone yttriée 3% obtenus par différents types d'usinage laser.
Les figures 6a et 6b sont des photographies d'un pivot d'axe de balancier en zircone yttriée 3% respectivement après usinage laser vert (Ref. 515) et après 10h de tribofinition faisant suite audit usinage.
Les figures 7a et 7b sont des photographies d'un pivot d'axe de balancier en zircone yttriée 3% respectivement après usinage laser UV (Ref. 434) et après 10h de tribofinition faisant suite audit usinage.
Les figures 8a et 8b sont des photographies d'un pivot d'un axe de balancier en zircone yttriée 3% respectivement après usinage par meulage et après 10h de tribofinition faisant suite audit usinage.
La figure 9 est un graphique représentant des valeurs de contraintes à rupture de différents axes de balancier en zircone yttriée 3% obtenus par différents procédés de réalisation.

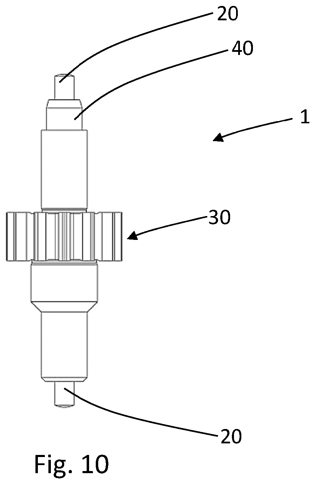

La figure 10 est une vue d'un autre mode de réalisation d'un composant horloger.

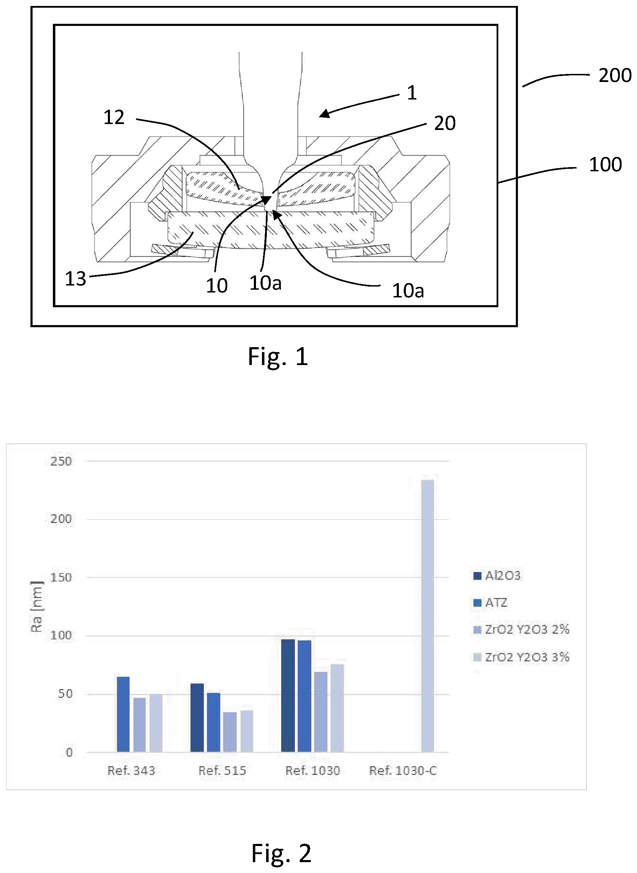

Un mode de réalisation d'une pièce d'horlogerie 200 selon l'invention est décrit ci-après en référence à la figure 1.

La pièce d'horlogerie 200 est par exemple une montre bracelet. La pièce d'horlogerie comprend de préférence une boîte de montre et un mouvement horloger 100.

Le mouvement horloger peut être un mouvement mécanique, notamment un mouvement automatique.

Le mouvement horloger comprend un mode de réalisation d'un composant horloger 1.

Le composant horloger est par exemple un axe, notamment un axe de balancier d'un oscillateur horloger du type balancier-spiral ou un axe d'un mobile d'échappement ou un axe d'un mobile des secondes. Le diamètre du composant, en particulier le diamètre maximal du composant, est par exemple inférieur ou égal à 2 mm.

Le composant horloger comprend de préférence un pivot 10. Par « pivot », nous entendons une portion de composant, en particulier d'axe, prévue pour coopérer, notamment coopérer par contact, avec un palier, en particulier une pierre de pivotement. Ce pivot peut présenter au moins une portion de géométrie cylindrique ou conique ou tronconique. Le pivot est préférentiellement disposé à une extrémité de l'axe. Le pivot peut, par exemple, être formé dans la continuité d'une portion d'axe comprenant une surface à génératrice courbe.

Le mouvement horloger comprend également un palier 12, voire plusieurs paliers montés sur un élément du mouvement, notamment sur un bâti du mouvement.

Le composant horloger est par exemple destiné à coopérer, notamment à coopérer par contact, avec le palier 12. En particulier, le composant horloger coopère avec le palier 12 au niveau du pivot 10. Plus particulièrement encore, le composant horloger coopère avec le palier 12 au niveau d'une surface 20 de révolution située au niveau du pivot 10. Le diamètre d'une section de la surface 20 de révolution est par exemple inférieur ou égal à 200 µm, voire inférieur ou égal à 100 µm. Optionnellement, le pivot peut être délimité axialement par un contre-pivot 13 au niveau d'une extrémité 10a du pivot 10. Les éléments 12 et 13 peuvent être disposés au sein d'un même élément prenant la forme d'un corps d'amortisseur. Dans ce cas particulier, l'axe est préférentiellement un axe de balancier ou un axe d'un mobile d'échappement.

Le palier comprend un alésage. L'alésage et la surface de révolution sont dimensionnés et/ou agencés pour présenter un jeu fonctionnel limité, par exemple de l'ordre de 7 à 17 µm.

Avantageusement, le composant horloger comprend deux pivots 10 pour coopérer avec deux paliers 12 de sorte à guider le composant horloger relativement aux paliers et plus globalement relativement à l'élément de mouvement horloger sur lequel les paliers sont montés.

Avantageusement, le composant horloger ou une partie du composant horloger est en céramique. La surface 20 de révolution est réalisée en céramique, c'est-à-dire que la surface de révolution est formée ou se trouve sur une partie en céramique du composant. De préférence, la céramique est une zircone, en particulier une zircone yttriée, notamment une zircone yttriée 3%, une alumine monocristalline ou une combinaison alumine-zircone (ATZ).

Ainsi, de préférence, tout ou partie du composant horloger est en céramique, et comprend la surface 20 de révolution dont la rugosité Ra est inférieure ou égale à 15 nm. Préférentiellement encore, le composant horloger comprend un pivot comprenant ladite surface de révolution. Avantageusement, la contrainte à la rupture en cisaillement du pivot du composant est supérieure à 200 N.mm⁻², voire supérieure à 250 N.mm⁻².

Un mode d'exécution d'un procédé de réalisation de la surface 20 de révolution du composant horloger 1 en céramique est décrit ci-après.

Le procédé de réalisation comprend :
- une étape d'usinage avec un faisceau laser femto-seconde d'une première surface du composant horloger de sorte à obtenir une deuxième surface, en particulier de sorte à obtenir une deuxième surface dont la rugosité Ra est inférieure à 100 nm, voire inférieure à 70 nm, puis
- une étape de tribofinition appliquée à la deuxième surface de sorte à obtenir ladite surface de révolution.

Un tel procédé permet d'obtenir des composants horlogers comprenant une surface de révolution en céramique, qui est conforme géométriquement et qui présente une rugosité adéquate après une tribofinition d'une durée raisonnable, typiquement de l'ordre de 10 heures. Cette étape de tribofinition doit être paramétrée de manière à ne pas modifier la géométrie de la surface, notamment de manière à éviter d'arrondir excessivement l'extrémité du ou des pivot(s) comprenant ladite surface de révolution afin de conserver le contrôle de la zone de contact entre le pivot et le palier. Il est donc essentiel que la rugosité initiale avant cette étape soit assez faible pour permettre une étape de tribofinition d'une durée raisonnable. La rugosité Ra de la surface 20 de révolution finalement obtenue est par exemple de l'ordre de 10 à 15 nm.

Un tel procédé fournit une alternative à l'usinage de la céramique par meulage et consiste à usiner la céramique par ablation laser femto-seconde sans venir affaiblir sa tenue mécanique. Les lasers utilisés ont des impulsions ultra-brèves (laser femto-seconde) de manière à ne pas affecter thermiquement la matière usinée, dans des longueurs d'onde adaptées afin de ne pas affecter la structure de la matière.

Avantageusement, le procédé permet la réalisation non seulement de la surface 20 de révolution du composant horloger 1, mais de toute la surface du pivot comprenant ladite surface 20, voire de toutes les surfaces du composant horloger.

Différents essais ont été réalisés sur différentes matières d'axes de balancier, telles qu'une zircone, une zircone yttriée, une alumine monocristalline (saphir) ou une combinaison alumine-zircone (ATZ). De manière plus particulière, la zircone yttriée 3% a été utilisée.

De préférence, le faisceau laser émet dans l'infrarouge avec une longueur d'onde comprise entre 800 nm et 1100 nm, idéalement de 1030 nm ± 5 nm ou dans le vert avec une longueur d'onde comprise entre 500 nm et 540 nm, idéalement de 515 nm ± 2.55 nm ou dans le bleu avec une longueur d'onde comprise entre 400 nm et 480 nm ou dans l'ultraviolet avec une longueur d'onde inférieure à 400 nm, idéalement de 343 nm ± 25 nm.

De préférence, l'étape d'usinage comprend une phase de tournage, c'est-à-dire une étape d'usinage dans laquelle le composant horloger est entraîné en rotation autour d'un axe de rotation et dans laquelle le faisceau laser est déplaçable par rapport à cet axe de rotation. Toute autre cinématique est envisageable du moment que le faisceau laser balaye une surface du composant.

De préférence, le faisceau laser a une énergie moyenne par impulsion (également appelée fluence) comprise entre 0.001 mJ et 2 mJ, de préférence comprise entre 0.01 mJ et 0.5 mJ, voire même entre 0.04 et 0.05 mJ pour les matières et les dimensions testées.

Le taux de recouvrement latéral, c'est-à-dire perpendiculairement à la direction de chariotage ou perpendiculairement à l'axe du composant, est défini par la vitesse de rotation de la pièce et la fréquence du laser, et peut être défini entre 0% et 99.9%. Il est de préférence compris entre 20% et 99.9%, idéalement compris entre 99.6% et 99.8%.

Le taux de recouvrement longitudinal est défini par la vitesse de balayage ou de chariotage du faisceau et la fréquence du laser, et peut être défini entre 0 et 99.9%. Il est de préférence compris entre 20 et 99.9%, idéalement compris entre 0% et 80.8%. Il est à noter qu'un taux de recouvrement longitudinal de 100% correspond à effectuer un tronçonnage de la pièce.

De préférence, le faisceau laser balaye la première surface selon une trajectoire hélicoïdale.

De préférence, le faisceau laser est appliqué selon des directions tangentes à la première surface, ou selon des directions sensiblement tangentes à la première surface. En alternative, le faisceau laser peut être appliqué selon des directions normales à la première surface, ou selon des directions sensiblement normales à la première surface.

De préférence, le faisceau laser a un diamètre compris entre 5 µm et 100 µm, de préférence entre 10 µm et 60 µm et idéalement entre 15 µm et 25 µm pour les matières et les dimensions testées.

De préférence, la durée de l'étape de tribofinition dure moins de 20 heures, de préférence moins de 10 heures.

De préférence, l'étape de tribofinition comprend une étape de polissage en vrac. De préférence, l'étape de tribofinition comprend l'utilisation de particules abrasives en diamant dont la taille est de l'ordre de 1 µm. De préférence l'étape de tribofinition comprend l'utilisation d'un porteur en céramique sous forme de billes de dimension comprise entre 125 et 250 µm additionné d'eau et d'un additif.

Différents essais ont aussi été réalisés en faisant varier la nature du faisceau laser. En particulier, plusieurs lasers opérant dans l'infrarouge (IR, longueur d'onde à 1030 nm), dans le vert (longueur d'onde à 515 nm) ou dans l'ultraviolet (UV, longueur d'onde à 343 nm), avec un équipement permettant de paramétrer les vitesses relatives de balayage du faisceau laser et de rotation du composant horloger, ont été testés. Le paramétrage a toutefois été maintenu identique (indiqué « E5 ») pour tous les essais présentés ci-dessous, en particulier au niveau de la fluence des lasers, qui a été maintenue constante entre les différents faisceaux, ainsi que les vitesses de balayage du faisceau et de rotation du composant horloger.

Comme indiqué sur le graphique de la figure 2, les lasers vert (Ref. 515) et UV (Ref. 343) permettent d'obtenir des rugosités satisfaisantes en sortie d'usinage, de l'ordre de 50 nm, pour diverses céramiques techniques. Le laser IR (Ref. 1030) permet d'obtenir des rugosités en sortie d'usinage de l'ordre de 50 à 100 nm, pour diverses céramiques techniques, pour peu que la configuration de l'équipement permette d'optimiser les paramètres par rapport aux équipements et paramètres connus de l'état de l'art (Ref. 1030-C).

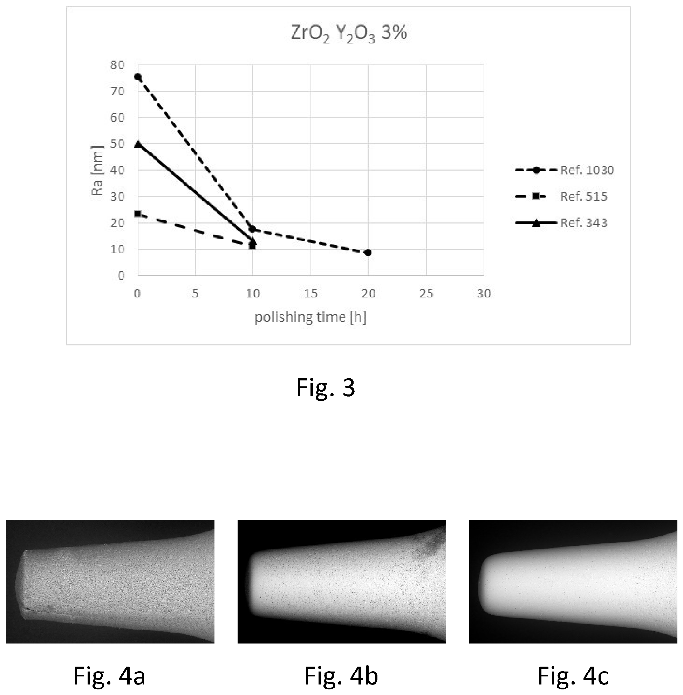

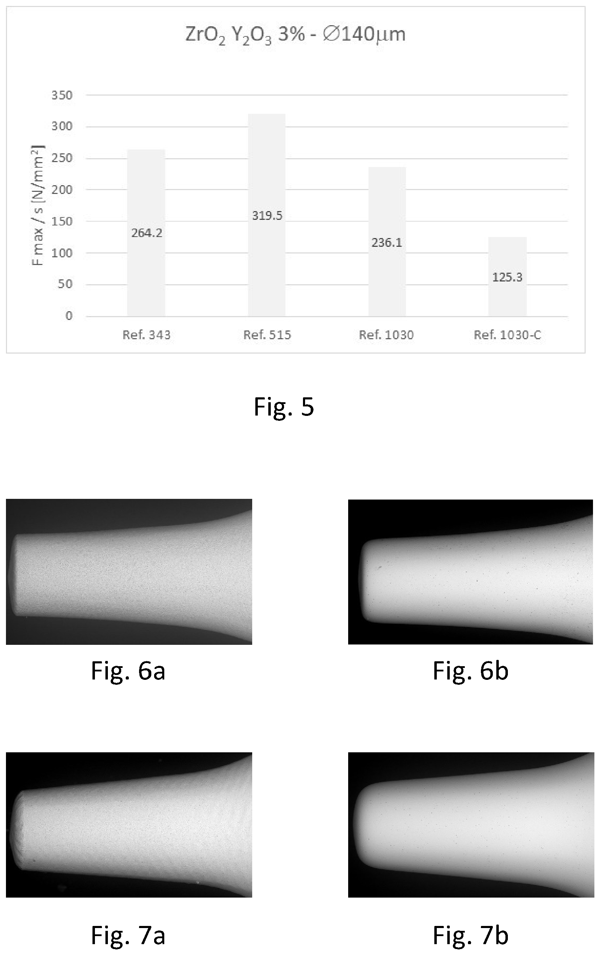

Comme indiqué sur la figure 3, les composants horlogers en zircone yttriée 3% usinés avec les lasers vert (Ref. 515), UV (Ref. 343) et IR (Ref. 1030) et tribofinis par une sollicitation mécanique effectuée par un mélange abrasif, mis en mouvement vibratoire dans une cuve, au moyen de particules abrasives de diamant d'environ 1 µm de diamètre associées à un porteur céramique en forme de billes de diamètre compris entre 125 µm et 250 µm, additionné d'eau et d'un additif, peuvent tous atteindre la rugosité finale adéquate de 10 à 15 nm. Cette rugosité finale adéquate est atteinte après 10 heures de tribofinition à partir des composants horlogers usinés avec les lasers vert (Ref. 515) et UV (Ref. 343). Il est nécessaire d'effectuer 20 heures de polissage à partir des composants horlogers usinés avec le laser IR (Ref. 1030) pour obtenir une rugosité équivalente. Ceci a pour conséquence, comme visible sur les figures 4a, 4b et 4c (représentant un pivot d'axe de balancier en zircone yttriée 3% respectivement après usinage laser IR (Ref. 1030), après 10h de tribofinition faisant suite audit usinage et après 20h de tribofinition faisant suite audit usinage), une modification des dimensions et de la géométrie des composants, notamment au niveau de l'extrémité des pivots, affectant ainsi le fonctionnement du composant horloger. Les figures 6a et 7a représentent l'aspect d'un pivot en zircone yttriée 3% juste après l'étape d'usinage respectivement avec un laser vert et avec un laser UV. Les figures 6b et 7b représentent l'aspect d'un pivot en zircone yttriée 3% après l'étape de tribofinition appliquée respectivement à des pivots tels qu'illustrés aux figures 6a et 7a. Les rugosités finales des composants illustrés sur les figures 4c, 6b et 7b sont satisfaisantes, mais l'extrémité du pivot de la figure 4c est arrondi ; ce changement de géométrie viendra influencer les performances chronométriques de la montre équipée d'un tel pivot.

Les résultats des observations et des mesures dimensionnelles ont été confirmés par des mesures de résistance à la flexion pour assurer que la fonction des composants horlogers de type axe puisse être remplie.

Comme indiqué sur le graphique de la figure 5, la résistance des pivots à la flexion, mesurée par la force appliquée par un couteau à une distance fixe de l'extrémité du pivot et rapportée à l'aire de la section du pivot à l'endroit de l'application du couteau, est plus importante pour les composants horlogers usinés avec le laser vert (Ref. 515) par rapport aux composants horlogers usinés avec le laser IR (Ref. 1030) ou le laser UV (Ref. 343). Ce test a été réalisé pour des composants horlogers en zircone yttriée 3%.

Il semble donc avantageux de travailler dans le domaine de la lumière verte (515 nm) ou de l'UV (343 nm) pour obtenir la rugosité la plus faible possible en sortie d'usinage et la résistance en flexion la plus grande.

Pour simplifier et clarifier la description, on appelle « composant horloger », le composant réalisé par la mise en œuvre du procédé quel que soit son stade de réalisation, c'est-à-dire qu'on appelle « composant horloger », le composant avant usinage laser, après usinage laser ou encore après tribofinition, bien que le composant subit des modifications au cours du procédé.

La surface 20 de révolution est ici décrite spécifiquement au niveau du pivot d'un axe de balancier, mais toute autre surface de révolution d'un axe horloger pour laquelle une géométrie et/ou une rugosité particulière devraient être atteintes peut également être réalisée selon le même procédé. En particulier, le procédé décrit plus haut permet de réaliser un axe d'un mobile d'échappement ou un axe d'un mobile des secondes ou tout autre axe prenant part à un mobile d'une chaîne de finissage d'un mouvement horloger.

Un tel axe peut comprendre une première portion 30 dentée. Cette portion 30 peut être venue de matière avec l'axe. Ainsi, l'axe peut se présenter sous la forme d'un pignon arbré. Un tel pignon arbré peut comprendre une deuxième portion 40 de réception d'une planche de roue. En particulier, un tel pignon arbré peut être fabriqué entièrement en céramique.

Alternativement, la première portion 30 dentée peut être rapportée sur une troisième portion de réception de l'axe, par exemple par chassage. Dans ce cas, la première portion 30 dentée peut être métallique.

Le diamètre maximal de la première portion 30 dentée, est par exemple inférieur ou égal à 2 mm. La denture de la première portion 30 peut présenter un profil conventionnel, comme un profil Treybal.

En regard de l'état de l'art qui fait intervenir des outils de coupe, l'utilisation d'un faisceau laser femto-seconde (vert ou UV) permet un gain de temps et une optimisation des propriétés du composant final, moyennant le respect de certaines conditions d'usinage. Il est par ailleurs possible qu'un faisceau laser femto-seconde opérant dans l'IR puisse également permettre d'obtenir des résultats adéquats sous certaines conditions.

Dans tout ce document, par « céramique », on entend un matériau homogène ou sensiblement homogène, y compris au niveau microscopique.

De préférence, la céramique est homogène dans au moins une direction, voire dans toutes les directions, sur une distance supérieure à 6 µm, voire supérieure à 10 µm, voire supérieure à 20 µm.

De préférence encore, la céramique ne présente pas de matériau non-céramique dans au moins une direction, voire dans toutes les directions, sur une distance supérieure à 6 µm, voire supérieure à 10 µm, voire supérieure à 20 µm.

De préférence, le fait que le composant et/ou la partie de composant soit en céramique signifie que ce composant ou cette partie est intégralement en céramique. De préférence encore, le fait que le composant et/ou la partie de composant soit en céramique exclut que le composant ou la partie de composant soit réalisé en un matériau composé de grains de céramique liés entre eux par une matrice non-céramique, comme une matrice métallique.

Le procédé décrit est particulièrement bien adapté à la fabrication d'un composant ou d'une partie de composant en céramique. Bien entendu, un composant métallique, par exemple un composant, notamment un axe, en tungstène ou en tantale ou en tout autre métal dur difficile à usiner par les moyens conventionnels, pourrait tirer profit d'un tel procédé.

Selon un autre aspect de l'invention, des objets sont définis par les propositions qui suivent :
1. Procédé de réalisation d'une surface (20) de révolution d'un composant horloger (1), le procédé comprenant :
   - une étape d'usinage avec un faisceau laser femto-seconde d'une première surface du composant horloger de sorte à obtenir une deuxième surface, en particulier de sorte à obtenir une deuxième surface dont la rugosité Ra est inférieure à 100 nm, voire inférieure à 70 nm, puis
   - une étape de tribofinition appliquée à la deuxième surface de sorte à obtenir ladite surface de révolution.
2. Procédé selon la proposition 1, caractérisé en ce que le composant horloger est un axe, notamment un axe de balancier ou un axe d'un mobile d'échappement ou un axe d'un mobile des secondes, et/ou en ce que le diamètre du composant est inférieur ou égal à 2 mm.
3. Procédé selon l'une des propositions 1 et 2, caractérisé en ce que la surface de révolution est une surface d'un pivot du composant horloger et/ou en ce que le diamètre de la surface de révolution est inférieur ou égal à 200 µm, voire inférieur à 100 µm.
4. Procédé selon l'une des propositions 1 à 3, caractérisé en ce que la surface de révolution est en céramique.
5. Procédé selon la proposition 4, caractérisé en ce que la céramique est une zircone, une zircone yttriée, notamment une zircone yttriée 3%, une alumine monocristalline ou une combinaison alumine-zircone.
6. Procédé selon l'une des propositions 1 à 5, caractérisé en ce que l'étape d'usinage comprend une phase de tournage.
7. Procédé selon l'une des propositions 1 à 6, caractérisé en ce que le faisceau laser est un faisceau laser infrarouge, notamment un faisceau laser infrarouge ayant une longueur d'onde comprise entre 800 nm et 1100 nm, en particulier une longueur d'onde de 1030 nm ± 5 nm, ou un faisceau laser vert, notamment un faisceau laser vert ayant une longueur d'onde comprise entre 500 nm et 540 nm, en particulier une longueur d'onde de 515 nm ± 2.55 nm, ou un faisceau laser ultraviolet, notamment un faisceau laser ultraviolet ayant une longueur d'onde inférieure à 400 nm, en particulier une longueur d'onde de 343 nm ± 25 nm, ou un faisceau laser bleu, notamment un faisceau laser bleu ayant une longueur d'onde comprise entre 400 nm et 480 nm.
8. Procédé selon l'une des propositions 1 à 7, caractérisé en ce que le faisceau laser a une énergie comprise entre 0.001 mJ et 2 mJ, de préférence comprise entre 0.01 mJ et 0.5 mJ, voire même comprise entre 0.04 et 0.05 mJ.
9. Procédé selon l'une des propositions 1 à 8, caractérisé en ce que le faisceau laser balaye la première surface selon une trajectoire hélicoïdale.
10. Procédé selon l'une des propositions 1 à 9, caractérisé en ce que le faisceau laser a un diamètre compris entre 5 µm et 100 µm, de préférence compris entre 10 µm et 60 µm, voire entre 15 µm et 25 µm.
11. Procédé selon l'une des propositions 1 à 10, caractérisé en ce que la durée de l'étape de tribofinition dure moins de 20 heures, de préférence moins de 10 heures.
12. Procédé selon l'une des propositions 1 à 11, caractérisé en ce que l'étape de tribofinition comprend une étape de polissage en vrac et/ou comprend l'utilisation de particules abrasives en diamant et/ou dont la taille est de l'ordre de 1 µm.
13. Composant horloger (1), notamment axe de balancier ou axe d'un mobile d'échappement ou axe d'un mobile des secondes, obtenu par la mise en œuvre du procédé de réalisation selon l'une des propositions 1 à 12.
14. Composant horloger (1), notamment composant horloger en céramique, ayant une surface (20) de révolution dont la rugosité Ra est inférieure ou égale à 15 nm et dont la contrainte à la rupture en cisaillement est supérieure à 200 N.mm⁻², voire supérieure à 250 N.mm⁻².
15. Mouvement horloger (100) comprenant un composant horloger selon la proposition 13 ou 14.
16. Pièce d'horlogerie (200), notamment montre bracelet, comprenant un composant horloger (1) selon la proposition 13 ou 14 et/ou un mouvement horloger (100) selon la proposition 15.

## Revendications

1. Procédé de réalisation d'une surface (20) de révolution d'un composant horloger (1), le procédé comprenant :
- une étape d'usinage avec un faisceau laser femto-seconde d'une première surface du composant horloger de sorte à obtenir une deuxième surface, en particulier de sorte à obtenir une deuxième surface dont la rugosité Ra est inférieure à 100 nm, voire inférieure à 70 nm, puis
- une étape de tribofinition appliquée à la deuxième surface de sorte à obtenir ladite surface de révolution,
le composant horloger (1) étant en métal dur, notamment en tungstène ou en tantale.

2. Procédé selon la revendication 1, **caractérisé en ce que** le composant horloger est un axe, notamment un axe de balancier ou un axe d'un mobile d'échappement ou un axe d'un mobile des secondes, et/ou **en ce que** le diamètre du composant est inférieur ou égal à 2 mm.

3. Procédé selon l'une des revendications précédentes, **caractérisé en ce que** la surface de révolution est une surface d'un pivot du composant horloger et/ou **en ce que** le diamètre de la surface de révolution est inférieur ou égal à 200 µm, voire inférieur à 100 µm.

4. Procédé selon l'une des revendications précédentes, **caractérisé en ce que** l'étape d'usinage comprend une phase de tournage.

5. Procédé selon l'une des revendications précédentes, **caractérisé en ce que** le faisceau laser est un faisceau laser infrarouge, notamment un faisceau laser infrarouge ayant une longueur d'onde comprise entre 800 nm et 1100 nm, en particulier une longueur d'onde de 1030 nm ± 5 nm, ou un faisceau laser vert, notamment un faisceau laser vert ayant une longueur d'onde comprise entre 500 nm et 540 nm, en particulier une longueur d'onde de 515 nm ± 2.55 nm, ou un faisceau laser ultraviolet, notamment un faisceau laser ultraviolet ayant une longueur d'onde inférieure à 400 nm, en particulier une longueur d'onde de 343 nm ± 25 nm, ou un faisceau laser bleu, notamment un faisceau laser bleu ayant une longueur d'onde comprise entre 400 nm et 480 nm.

6. Procédé selon l'une des revendications précédentes, **caractérisé en ce que** le faisceau laser a une énergie comprise entre 0.001 mJ et 2 mJ, de préférence comprise entre 0.01 mJ et 0.5 mJ, voire même comprise entre 0.04 et 0.05 mJ.

7. Procédé selon l'une des revendications précédentes, **caractérisé en ce que** le faisceau laser balaye la première surface selon une trajectoire hélicoïdale.

8. Procédé selon l'une des revendications précédentes, **caractérisé en ce que** le faisceau laser a un diamètre compris entre 5 µm et 100 µm, de préférence compris entre 10 µm et 60 µm, voire entre 15 µm et 25 µm.

9. Procédé selon l'une des revendications précédentes, **caractérisé en ce que** la durée de l'étape de tribofinition dure moins de 20 heures, de préférence moins de 10 heures.

10. Procédé selon l'une des revendications précédentes, **caractérisé en ce que** l'étape de tribofinition comprend une étape de polissage en vrac et/ou comprend l'utilisation de particules abrasives en diamant et/ou dont la taille est de l'ordre de 1 µm.

11. Composant horloger (1), notamment axe de balancier ou axe d'un mobile d'échappement ou axe d'un mobile des secondes, obtenu par la mise en œuvre du procédé de réalisation selon l'une des revendications précédentes.

12. Composant horloger (1), notamment composant horloger en céramique, ayant une surface (20) de révolution dont la rugosité Ra est inférieure ou égale à 15 nm et dont la contrainte à la rupture en cisaillement est supérieure à 200 N.mm⁻², voire supérieure à 250 N.mm⁻².

13. Mouvement horloger (100) comprenant un composant horloger selon la revendication 11 ou 12.

14. Pièce d'horlogerie (200), notamment montre bracelet, comprenant un composant horloger (1) selon la revendication 11 ou 12 et/ou un mouvement horloger (100) selon la revendication précédente.
